# EUROPÄISCHE PATENTANMELDUNG

(11) **EP 4 609 823 A1**
(43) Veröffentlichungstag der Anmeldung: **03.09.2025**
(21) Anmeldenummer: 25157416.6
(22) Anmeldetag: 12.02.2025
(51) Int. Cl.: A61C 5/77, A61C 13/00, A61C 13/01, A61C 13/09, A61C 13/271, B33Y 80/00

(54) **FEM-ANALYSE FÜR DIE HERSTELLUNG DENTALER RESTAURATIONEN**

(30) Priorität: 27.02.2024 EP 24159881
(71) Anmelder: Ivoclar Vivadent AG, 9494 Schaan (LI)
(72) Erfinder: Eser, Atilim, 88131 Lindau (DE)
(74) Vertreter: Baldus, Oliver

(57) **Zusammenfassung**

Die vorliegende Erfindung betrifft ein Verfahren zum Aufbauen einer dentalen Restauration, mit den Schritten eines Bereitstellens (S101) eines dreidimensionalen Datensatzes, der die räumliche Form der dentalen Restauration und eine räumliche Verteilung zumindest eines Herstellungsmaterials innerhalb der dentalen Restauration angibt; eines Simulierens (S102) einer räumlichen Spannungsverteilung innerhalb der dentalen Restauration bei einer vorgegebenen Belastung auf Basis des dreidimensionalen Datensatzes; und eines Veränderns (S103) des dreidimensionalen Datensatzes auf Basis der simulierten Spannungsverteilung.

## Beschreibung

Die vorliegende Erfindung betrifft ein Verfahren zum Aufbauen einer dentalen Restauration, ein Computerprogramm und ein Herstellungsgerät.

In dentalen Restaurationen können bei Belastungen mechanische Spannungsspitzen auftreten, die zum Bruch oder zu einer Beschädigung der dentalen Restauration führen.

Es ist daher die technische Aufgabe der vorliegenden Erfindung, die Stabilität von dentalen Restaurationen zu verbessern.

Diese Aufgabe wird durch Gegenstände nach den unabhängigen Ansprüchen gelöst. Vorteilhafte Ausführungsformen sind Gegenstand der abhängigen Ansprüche, der Beschreibung und der Figuren.

Gemäß einem ersten Aspekt wird die vorliegende Aufgabe durch ein Verfahren zum Aufbauen einer dentalen Restauration gelöst, mit den Schritten eines Bereitstellens eines dreidimensionalen Datensatzes, der die räumliche Form der dentalen Restauration und eine räumliche Verteilung zumindest eines Herstellungsmaterials innerhalb der dentalen Restauration angibt; eines Simulierens einer räumlichen Spannungsverteilung innerhalb der dentalen Restauration bei einer vorgegebenen Belastung auf Basis des dreidimensionalen Datensatzes; und eines Veränderns des dreidimensionalen Datensatzes auf Basis der simulierten Spannungsverteilung. Das Verändern des Datensatzes kann durch Verändern der Form und/oder der Materialzusammensetzung erfolgen, die durch den Datensatz wiedergegeben wird. Dadurch wird der technische Vorteil erreicht, dass Spannungsspitzen innerhalb der dentalen Restauration erkannt und konstruktiv vermindert werden können und eine insgesamt homogenere Spannungsverteilung innerhalb der dentalen Restauration erreicht wird.

In einer technisch vorteilhaften Ausführungsform des Verfahrens wird die Oberfläche der dentalen Restauration durch Dreiecksfacetten abgebildet. Dadurch wird beispielsweise der technische Vorteil erreicht, dass die räumliche Form der dentalen Restauration auf einfache Weise erfasst werden kann.

In einer weiteren technisch vorteilhaften Ausführungsform des Verfahrens weisen die Dreiecksfacetten in einem Bereich zwischen zwei Zähnen oder im Bereich einer Okklusal-Fläche eine geringere Fläche als in einem anderen Bereich der dentalen Restauration auf, wie beispielsweise in einem Bereich der Seitenfläche des Zahnes. Dadurch wird beispielsweise der technische Vorteil erreicht, dass die Spannungsverteilung schnell und mit einer hohen Genauigkeit berechnet werden kann.

In einer weiteren technisch vorteilhaften Ausführungsform des Verfahrens wird die räumliche Form der dentalen Restauration verändert, beispielsweise um Spannungsspitzen zu verringern. Dadurch wird beispielsweise der technische Vorteil erreicht, dass die Form der dentalen Restauration gezielt lokal angepasst werden kann.

In einer weiteren technisch vorteilhaften Ausführungsform des Verfahrens wird ein lokaler Bereich der Form ausgedehnt, wenn eine Spannung innerhalb der Spannungsverteilung des lokalen Bereiches oberhalb eines vorgegebenen Grenzwertes liegt und/oder ein lokaler Bereich der Form verringert, wenn eine Spannung innerhalb der Spannungsverteilung des lokalen Bereiches unterhalb eines vorgegebenen Grenzwertes liegt. Dadurch wird beispielsweise der technische Vorteil erreicht, dass eine bessere Spannungsverteilung innerhalb der dentalen Restauration erreicht wird und Spannungsspitzen vermindert werden.

In einer weiteren technisch vorteilhaften Ausführungsform des Verfahrens wird ein Verbindungsquerschnitt zwischen zwei Zähnen der dentalen Restauration erhöht, wenn eine Spannung innerhalb der Spannungsverteilung oberhalb eines vorgegebenen Grenzwertes liegt und/oder ein Verbindungsquerschnitt zwischen zwei Zähnen der dentalen Restauration verringert, wenn eine Spannung innerhalb der Spannungsverteilung unterhalb eines vorgegebenen Grenzwertes liegt. Dadurch wird beispielsweise ebenfalls der technische Vorteil erreicht, dass eine bessere Spannungsverteilung innerhalb der dentalen Restauration oder ein natürlicheres Aussehen erreicht wird und Spannungsspitzen vermindert werden.

In einer weiteren technisch vorteilhaften Ausführungsform des Verfahrens wird das Herstellungsmaterial in einem räumlichen Bereich ersetzt, wenn eine Spannung innerhalb der die Spannungsverteilung oberhalb oder unterhalb eines vorgegebenen Grenzwertes liegt, beispielsweise um Spannungsspitzen zu verringern. Beispielsweise kann in dem räumlichen Bereich statt einem ersten Herstellungsmaterial ein zweites Herstellungsmaterial verwendet werden. In diesem Fall wird ein Herstellungsmaterial durch ein anderes Herstellungsmaterial ersetzt und das Simulieren der Spannungsverteilung erneut durchgeführt. Dadurch wird beispielsweise der technische Vorteil erreicht, dass im Falle einer hohen Spannung ein festeres Herstellungsmaterial und im Falle einer niedrigeren Spannung ein weniger festes Herstellungsmaterial verwendet werden kann.

In einer weiteren technisch vorteilhaften Ausführungsform des Verfahrens wird einem ersten räumlichen Bereich der dentalen Restauration ein erstes Herstellungsmaterial und einem zweiten räumlichen Bereich der dentalen Restauration ein zweites Herstellungsmaterial zugeordnet. Dadurch wird beispielsweise der technische Vorteil erreicht, dass ein Aufbau mit mehreren Materialien erreicht wird.

In einer weiteren technisch vorteilhaften Ausführungsform des Verfahrens werden die Materialparameter vorgegebener Herstellungsmaterialien zum Simulieren der Spannungsverteilung aus einer Datenbank abgerufen. Dadurch wird beispielsweise der technische Vorteil erreicht, dass die Materialeigenschaften zahlreicher Herstellungsmaterialien abgerufen werden können.

In einer weiteren technisch vorteilhaften Ausführungsform des Verfahrens wird die Spannungsverteilung mit der veränderten Form und/oder dem veränderten Herstellungsmaterial erneut simuliert. Dadurch wird beispielsweise der technische Vorteil erreicht, dass je nach berechneter Spannung ein bestimmtes Herstellungsmaterial verwendet wird.

In einer weiteren technisch vorteilhaften Ausführungsform des Verfahrens werden die Verfahrensschritte iterativ wiederholt. Dadurch wird beispielsweise der technische Vorteil erreicht, dass der Aufbau der dentalen Restauration sukzessive verbessert wird.

In einer weiteren technisch vorteilhaften Ausführungsform des Verfahrens wird ein iteratives Wiederholen der Verfahrensschritte beendet , wenn eine Spannung innerhalb der Spannungsverteilung einen vorgegebenen Wert unterschreitet oder überschreitet. Dadurch wird beispielsweise der technische Vorteil erreicht, dass das Verfahren mit geringem Rechenaufwand beendet wird.

In einer weiteren technisch vorteilhaften Ausführungsform des Verfahrens beruht das Simulieren der räumlichen Spannungsverteilung auf einer Finite-Elemente-Methode. Dadurch wird beispielsweise der technische Vorteil erreicht, dass sich die Spannungsverteilung besonders effizient berechnen lässt.

In einer weiteren technisch vorteilhaften Ausführungsform des Verfahrens ist die dentale Restauration eine Prothese, Brücke oder eine Krone. Dadurch wird beispielsweise der technische Vorteil erreicht, dass das Verfahren für diese Restaurationen besonders geeignet ist.

In einer weiteren technisch vorteilhaften Ausführungsform des Verfahrens wird der dreidimensionale Datensatz an ein Herstellungsgerät übermittelt. Dadurch wird beispielsweise der technische Vorteil erreicht, dass die Herstellung der dentalen Restauration vereinfacht wird.

In einer weiteren technisch vorteilhaften Ausführungsform des Verfahrens wird ein materialspezifischer Mindestwert bei der Herstellung der dentalen Restauration unterschritten und/oder ein materialspezifischer Höchstwert bei der Herstellung der dentalen Restauration überschritten.

In einer weiteren technisch vorteilhaften Ausführungsform des Verfahrens ist das Herstellungsgerät ein 3D-Drucker oder eine Fräsmaschine. Dadurch wird beispielsweise der technische Vorteil erreicht, dass die dentale Restauration auf einfache Weise hergestellt werden kann.

Gemäß einem zweiten Aspekt wird die vorliegende Aufgabe durch ein Computerprogramm gelöst, umfassend Befehle, die bei der Ausführung des Computerprogramms durch einen Computer diesen veranlassen, das Verfahren nach dem ersten Aspekt auszuführen. Durch das Computerprogramm werden die gleichen technischen Vorteile wie durch das Verfahren nach dem ersten Aspekt erreicht.

Gemäß einem dritten Aspekt wird die vorliegende Aufgabe durch ein Herstellungsgerät mit einem Computerprogramm nach dem zweiten Aspekt gelöst. Durch das Herstellungsgerät werden die gleichen technischen Vorteile wie durch das Verfahren nach dem ersten Aspekt erreicht.

Ausführungsbeispiele der Erfindung sind in den Zeichnungen dargestellt und werden im Folgenden näher beschrieben.

Es zeigen:
- Fig. 1: eine Ansicht einer Spannungsverteilung innerhalb einer dentalen Restauration;
- Fig. 2: eine weitere Ansicht der Spannungsverteilung innerhalb der dentalen Restauration;
- Fig. 3: eine Ansicht eines dreidimensionalen Datensatzes einer dentalen Restauration mit vorgegebener Belastung;
- Fig. 4: eine Ansicht eines dreidimensionalen Datensatzes einer dentalen Restauration mit Unterteilung in Dreiecksfacetten;
- Fig. 5: eine Ansicht eines dreidimensionalen Datensatzes einer dentalen Restauration mit Metallschiene;
- Fig. 6: eine Ansicht eines dreidimensionalen Datensatzes einer permanenten und einer temporären dentalen Restauration;
- Fig. 7: eine Ansicht einer dentalen Restauration mit unterschiedlichen Festigkeitswerten;
- Fig. 8: eine Ansicht einer Veränderung des Belastungsortes an der dentalen Restauration;
- Fig. 9: ein Diagramm für einen statischen Bruchfall und einen Ermüdungsbruch; und
- Fig. 10: ein Blockdiagramm eines Verfahrens zum Aufbauen einer dentalen Restauration.

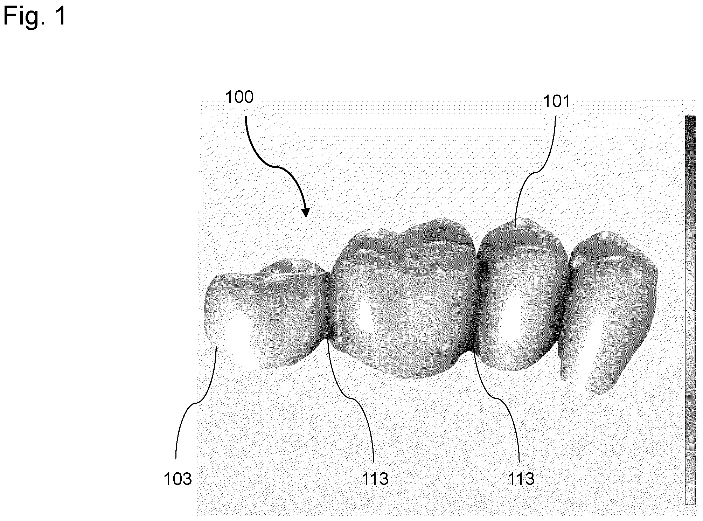

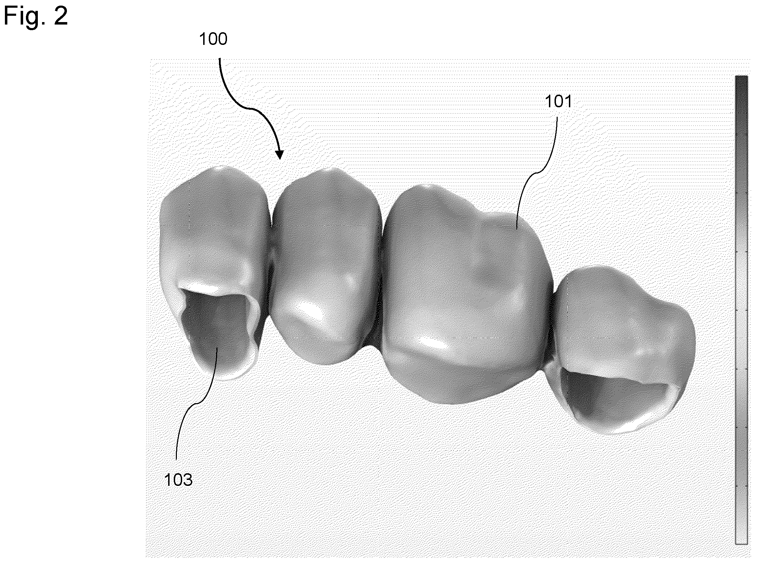

Fig. 1 und 2 zeigen eine Spannungsverteilung 113 innerhalb einer dentalen Restauration 100. Die dentale Restauration 100 ist beispielsweise eine Prothese, eine Krone oder eine Brücke. Bei der Berechnung der Spannungsverteilung 113 kann die Finite-Elemente-Methode verwendet werden. Die Finite-Elemente-Methode (FEM) wird bei der Festigkeitsuntersuchung von Festkörpern mit geometrisch komplexer Form verwendet. Logisch basiert die Finite-Elemente-Methode auf dem numerischen Lösen eines komplexen Systems aus Differentialgleichungen.

Durch die Finite-Elemente-Methode wird die Spannungsverteilung 113 bei einer vorgegebenen Belastung der dentalen Restauration 100 auf Basis der räumlichen Form, der räumlichen Verteilung der verwendeten Herstellungsmaterialen 101 innerhalb der dentalen Restauration 100 mit den Materialeigenschaften der verwendeten Herstellungsmaterialen 101 simuliert. Die räumliche Form ist beispielsweise durch die äußere Oberfläche der dentalen Restauration 100 gegeben.

Die Festigkeit der dentalen Restauration 100 hängt beispielsweise nicht nur von einer Schichtdicke der Herstellungsmaterialien 101 oder der Größe eines Verbindungsquerschnittes zwischen zwei Zähnen ab, sondern auch von der genaueren Form der dentalen Restauration 100. Beispielsweise kann eine Dentalbrücke mit einem kleineren Verbindungsquerschnitt zwischen zwei Zähnen höhere Kaukräfte aushalten als eine andere Dentalbrücke mit einem größeren Verbindungsquerschnitt.

Im Inneren der dentalen Restauration 100 können zudem in unterschiedlichen räumlichen Bereichen unterschiedliche Herstellungsmaterialien 101 angeordnet und verwendet werden, wie beispielsweise Zirkon 3Y-TZP oder 5Y-TZP. Diese können je nach den Materialparametern der Herstellungsmaterialien 101 an unterschiedlichen Stellen und in unterschiedlichen Bereichen eingesetzt werden. Beispielsweise wird in einem Innenbereich der dentalen Restauration 100 ein anderes Herstellungsmaterial 101 verwendet als in einem Außenbereich.

In einem Bereich mit einer hohen Spannung kann beispielsweise ein Herstellungsmaterial 101 mit einer höheren Festigkeit eingesetzt werden als in einem Bereich mit einer niedrigeren Spannung. Der Bereich, in dem das Herstellungsmaterial mit einer höheren Festigkeit verwendet wird, ist beispielsweise ein räumlicher Bereich, in dem die simulierte Spannung über einem vorgegebenen Grenzwert liegt. Im Allgemeinen können jedoch beliebig viele Herstellungsmaterialien 101 zum Herstellen der dentalen Restauration 100 eingesetzt werden.

Durch die Simulation kann eine räumlichen Spannungsverteilung 113 innerhalb der dentalen Restauration 100 berechnet werden. Die Spannungsverteilung 113 gibt die Spannung an jedem Ort im Inneren der dentalen Restauration an. Je nach berechneter Spannungsverteilung 113 kann anschließend der dreidimensionale Datensatz 103 verändert werden, um eine Spanungsverteilung 113 mit einer geringeren Maximalspannung oder räumlich homogeneren Spannung zu erhalten. Die Maximalspannung ist die größte Spannung, die innerhalb der dentalen Restauration 100 oder innerhalb eines vorgegebenen Bereiches auftritt. Die Maximalspannung wird anhand des Zeitfestigkeitswerts des Materials beurteilt, der wiederum durch die Ermüdungsprüfung des Materials ermittelt wird. Es werden zwei unterschiedliche Lastfälle berechnet, nämlich der statische und dynamische Fall. Für den dynamischen Fall wird die Spannung mit dem Zeitfestigkeitswert verglichen und für den statischen Fall mit der statischen Festigkeit.

Das Verändern des Datensatzes kann durch Verändern der Form der dentalen Restauration 100 und/oder der Materialverteilung und Zusammensetzung der Herstellungsmaterialien 101 erreicht werden. Beim Verändern der Form werden bestimmte räumliche Bereiche der dentalen Restauration 100 räumlich vergrößert oder verkleinert. Dadurch kann eine homogenere Spannungsverteilung erreicht werden und Spannungsspitzen verringert werden. Beim Verändern der Zusammensetzung kann in bestimmten räumlichen Bereichen ein anderes Herstellungsmaterial angeordnet werden als dies bei der Berechnung der Simulation der Fall war. Nach dem Ersetzen des Herstellungsmaterials 101 durch ein anderes Herstellungsmaterial 101 kann das Simulieren der Spannungsverteilung 113 erneut durchgeführt werden, um zu ermitteln, ob eine Spannung innerhalb der Spannungsverteilung 113 des lokalen Bereiches oberhalb oder unterhalb eines vorgegebenen Grenzwertes liegt.

Auch durch ein Verändern der Herstellungsmaterialien können Spannungsspitzen innerhalb der dentalen Restauration 100 ausgeglichen werden. Die Herstellungsmaterialien 101 können beispielsweise Zirkondioxid mit unterschiedlichen Yttriumanteilen umfassen, wie beispielsweise Zirkon 3Y-TZP, 4Y-TZP, oder 5Y-TZP. Für den veränderten dreidimensionalen Datensatz 103 wird dann erneut eine Simulation der Spannungsverteilung 113 durchgeführt.

Die Freigabe eines Materials für bestimmte dentale Restaurationen 100 kann zudem auf den Ergebnissen der FEM-Simulationen basieren. Alle Herstellungsmaterialen 101 sind grundsätzlich für alle Indikationen freigegeben. Zudem können patientenspezifische FEM-Berechnungen mit der Berücksichtigung von Kaukräften durchgeführt werden.

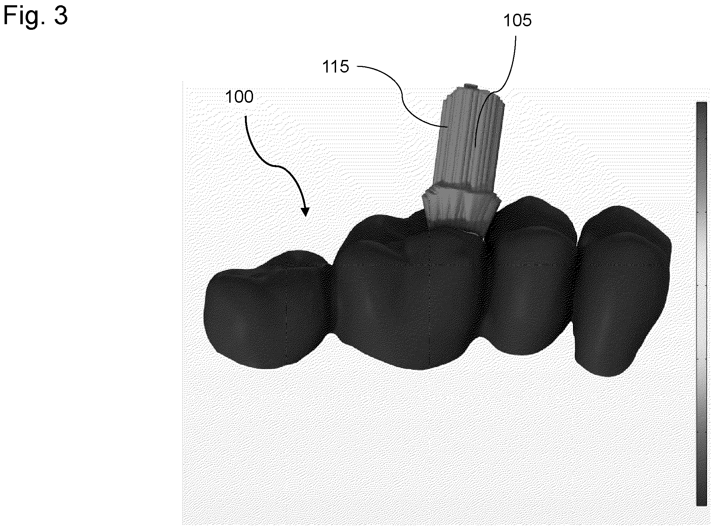

Fig. 3 zeigt eine Ansicht eines dreidimensionalen Datensatzes einer dentalen Restauration 100 mit vorgegebener Belastung 105. Die vorgegebene Belastung 105 entsteht dadurch, dass bei dem Simulieren ein Kraftvektor 115 rechnerisch auf die dentale Restauration 100 wirkt. Der Kraftvektor 115 steht beispielsweise senkrecht auf einer Kaufläche der dentalen Restauration 100 oder ist parallel zur Längsachse eines Zahns angeordnet. Der Kraftvektor 115 gibt typischerweise die Kraft an, die beim Kauen auf die dentale Restauration 100 wirkt.

Bei einer Brücke als dentaler Restauration 100 kann der Kraftvektor 115 in der Mitte von zwei vorgesehenen Stützzähnen angeordnet sein. Der Betrag des Kraftvektors 115 ist bei dentalen Restaurationen 100 für den Frontzahnbereich geringer als bei dentalen Restaurationen 100 im hinteren Backenzahnbereich. Der Betrag des Kraftvektors kann proportional zur Zahnnummer berechnet werden.

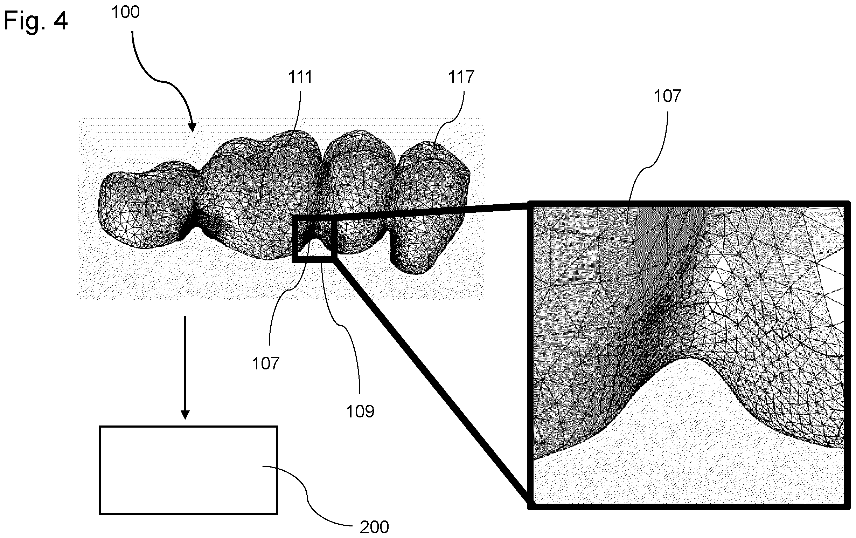

Fig. 4 zeigt eine Ansicht eines dreidimensionalen Datensatzes 103 einer dentalen Restauration 100 mit Unterteilung in Dreiecksfacetten 107. Für das Simulieren der Spannungsverteilung 113 wird die Oberfläche des dreidimensionalen Datensatzes durch Dreiecksfacetten diskretisiert. Die Dreiecksfacetten 107 weisen je nach Ort innerhalb der dentalen Restauration 100 eine unterschiedliche Größe auf.

Zum Simulieren der räumlichen Spannungsverteilung 113 innerhalb der dentalen Restauration 100 bei einer vorgegebenen Belastung auf Basis des dreidimensionalen Datensatzes wird beispielsweise die Größe der Dreiecksfacetten 107 im Bereich 109 zwischen zwei modellierten Zähnen oder einer Okklusal-Fläche 117 verringert.

Die Fläche der jeweiligen Dreiecksfacetten 107 im Bereich 109 zwischen zwei modellierten Zähnen oder im Bereich der Okklusal-Fläche 117 beträgt beispielsweise weniger als die Hälfte der Fläche der Dreiecksfacetten im Bereich 111, an der mittleren Seitenfläche eines Zahns. Durch die feinere Vernetzung lassen sich die Spannungsverteilungen 113 mit einer hohen Genauigkeit berechnen. Der dreidimensionale Datensatz 103 kann nach der Berechnung an ein Herstellungsgerät 200 übermittelt werden, das anschließend die dentale Restauration 100 entsprechend herstellt.

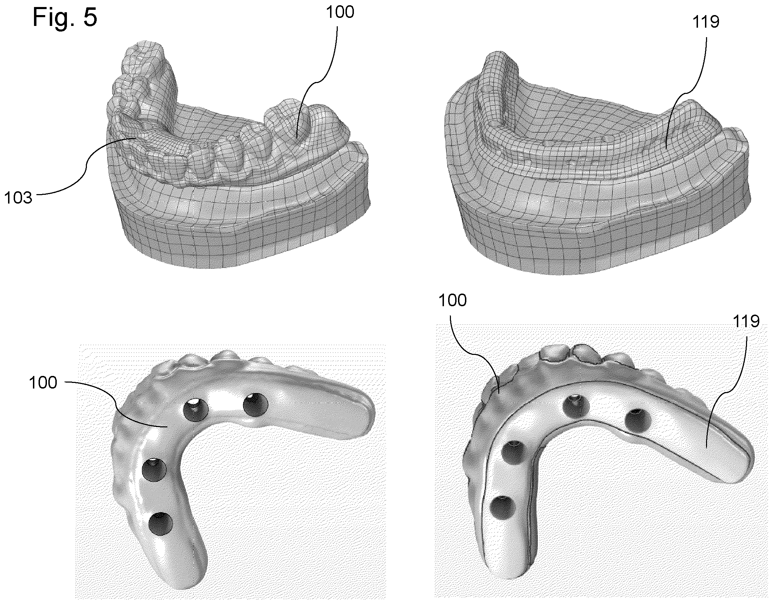

Fig. 5 zeigt eine Ansicht eines dreidimensionalen Datensatzes 103 einer dentalen Restauration 100 mit Metallschiene 119 (Metallbar). Zur Verstärkung der dentalen Restauration 100 kann die Metallschiene 119 in die dentale Restauration 100 eingebettet werden.

Wenn eine Spannung innerhalb der Spannungsverteilung 113 oberhalb eines vorgegebenen Grenzwertes liegt, kann automatisch die Metallschiene 119 zur Verstärkung in die dentale Restauration 100 eingebettet werden. Die Metallschiene 119 unterstützt die dentale Restauration 100 entlang des Zahnbogens. Das Programm kann anhand der Simulationsergebnisse beurteilen und entscheiden, ob für die dentale Restauration 100 aus Kunststoff eine Metallschiene 119 erforderlich ist oder nicht.

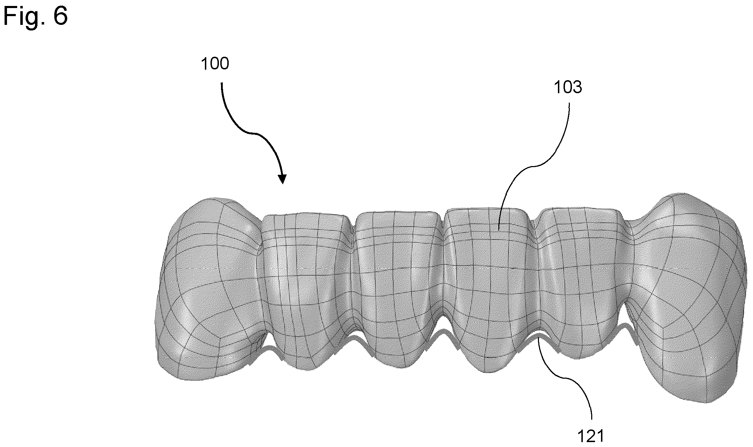

Fig. 6 zeigt eine Ansicht eines dreidimensionalen Datensatzes 103 mit einer permanenten dentalen Restauration 100 und einer temporären dentalen Restauration 121. Für eine temporäre dentale Restauration 121 wird ein Herstellungsmaterial mit einer geringeren Festigkeit verwendet. Durch das Verfahren kann die konstruierte dauerhafte dentale Restauration 100 derart angepasst werden, damit diese für eine temporäre dentale Restauration 100 verwendet werden kann.

Zu diesem Zweck werden Bereiche der dauerhaften dentalen Restauration 100 mit Spannungen innerhalb der Spannungsverteilung 113 des lokalen Bereiches oberhalb eines vorgegebenen Grenzwertes für das Herstellungsmaterial mit der geringeren Festigkeit verstärkt. Beispielsweise wird der Verbindungsquerschnitt an den Zahnzwischenräumen vergrößert.

Vorgegebene materialspezifische Mindestwerte, beispielsweise für eine Wandstärke oder Querschnittsfläche der dentalen Restauration 100, müssen je nach Simulationsergebnis der räumlichen Spannungsverteilung 113 nicht zwingend eingehalten werden. Erlaubt beispielsweise die Simulation eine Wandstärke, die unter dem materialspezifischen Mindestwert für die Wandstärke liegt, kann die dentale Restauration 100 mit der geringeren Wandstärke hergestellt werden.

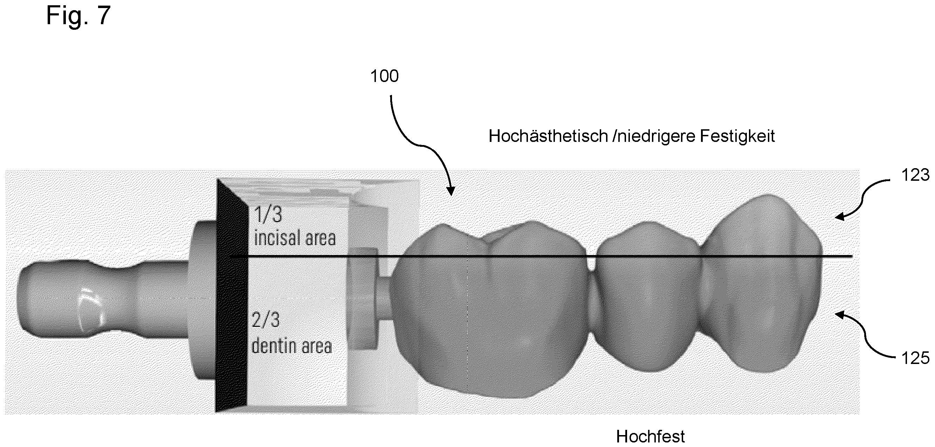

Fig. 7 zeigt eine Ansicht einer dentalen Restauration 100 mit unterschiedlichen Festigkeitswerten. Der dreidimensionale Datensatz 103 kann zusätzlich eine Verteilung von Festigkeitswerten des Herstellungsmaterials innerhalb der dentalen Restauration 100 angeben. Die räumliche Spannungsverteilung 113 innerhalb der dentalen Restauration 100 kann bei einer vorgegebenen Belastung 105 auf Basis des dreidimensionalen Datensatzes 103 mit der entsprechenden Verteilung von Festigkeitswerten berechnet werden.

Beispielsweise umfasst die zu simulierende dentale Restauration 100 einen Inzisalbereich 123 aus einem hochästhetischen Herstellungsmaterial mit geringerer Festigkeit und einen Dentinbereich 125 mit einem hochfesten Herstellungsmaterial. Bei der Simulation der Spannungsverteilung werden die unterschiedlichen Festigkeitswerte des Herstellungsmaterials mitberücksichtigt.

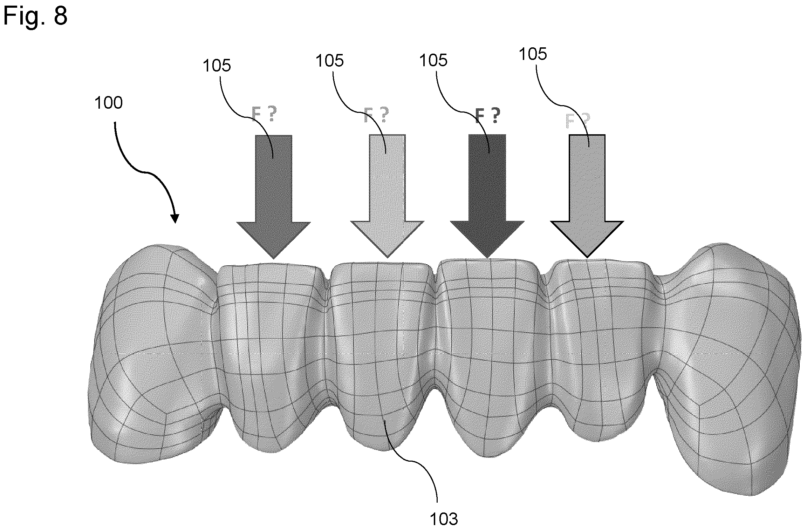

Fig. 8 zeigt eine Ansicht einer Veränderung des Belastungsorts an der dentalen Restauration 100. Die Größe, Position und/oder Richtung der Belastung 105 kann jeweils für eine Simulation der Spannungsverteilung 113 verändert werden. Beispielsweise wird eine vorgegebene Belastung 105 an unterschiedlichen Positionen der dentalen Restauration 100 beim Simulieren der räumlichen Spannungsverteilung 113 ausgeübt.

Zu jeder Größe, Position und/oder Richtung der Belastung 105 kann eine räumliche Spannungsverteilung 113 innerhalb der dentalen Restauration 100 auf Basis des dreidimensionalen Datensatzes 103 berechnet werden. Die berechneten Spannungsverteilungen 113 zu jeder Belastung können miteinander verglichen werden, um einen kritischen Belastungsort zu finden. Der kritische Belastungsort wird beispielsweise durch diejenige Spannungsverteilung 113 angezeigt, die den größten Maximalwert der Spannung innerhalb der Spannungsverteilung 113 oder den größten Durchschnittswert der Spannung innerhalb der Spannungsverteilung 113 aufweist. Aus der Spannungsverteilung mit dem größten Maximalwert der Spannung oder dem größten Durchschnittswert der Spannung kann dann die Größe, Position und/oder Richtung der kritischen Belastung 105 ermittelt werden.

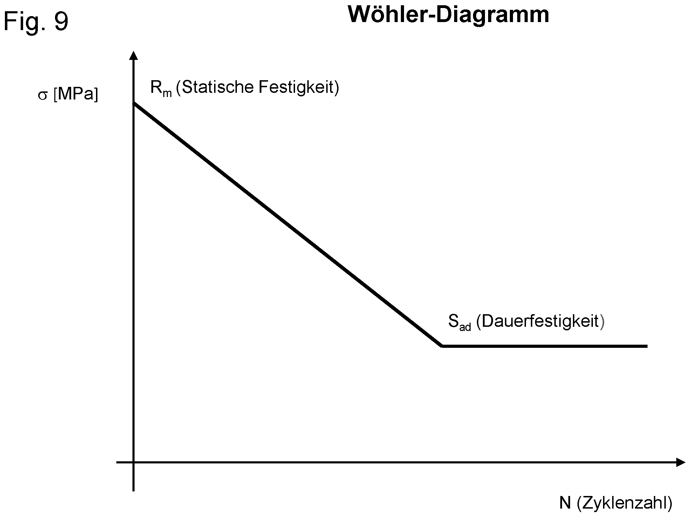

Fig. 9 zeigt ein Diagramm für einen statischen Bruchfall und einen Ermüdungsbruch der dentalen Restauration 100. Es können bei der Simulation zwei verschiedene Belastungsszenarien berücksichtigt werden, um die mechanische Stabilität der dentalen Restauration 100 zu bewerten. Zum einen kann der statische Bruch der dentalen Restauration 100 betrachtet werden, der durch eine einmalige höhere Kraft verursacht wird, beispielsweise durch Beißen auf einen Kirschkern. Hierbei werden die berechneten Spannungen mit der statischen Festigkeit Rₘ verglichen.

Zum anderen kann der Ermüdungsbruch der dentalen Restauration 100 durch tägliche zyklische Kaubewegungen betrachtet werden. Hierbei werden die berechneten Spannungen mit der Dauerfestigkeit S_{ad} verglichen. Der dreidimensionale Datensatz 103 kann auf Basis der simulierten Spannungsverteilung 113 angepasst werden, wenn beispielsweise eine Spannung innerhalb der Spannungsverteilung 113 über der statischen Festigkeit Rₘ oder der Dauerfestigkeit S_{ad} der dentalen Restauration liegt.

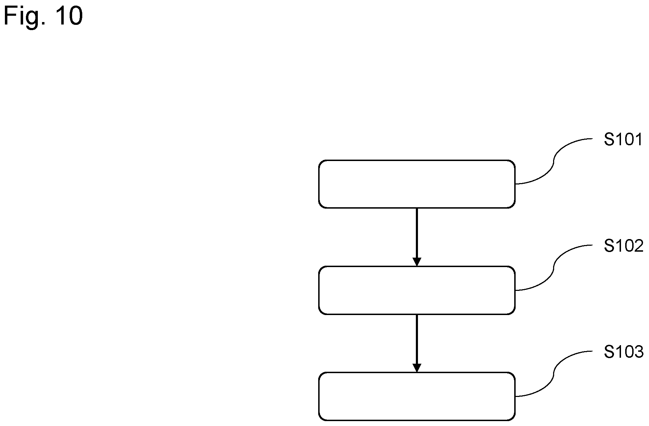

Fig. 10 zeigt ein Blockdiagramm eines Verfahrens zum Aufbauen der dentalen Restauration 100. Im Schritt S101 wird der dreidimensionale Datensatz 103 bereitgestellt, der die räumliche Form der dentalen Restauration 100 und die räumliche Verteilung der Herstellungsmaterialien 101 innerhalb der dentalen Restauration 100 angibt. Der Datensatz 103 kann in einem digitalen Speicher gespeichert sein, wie beispielsweise einem RAM-Speicher, einem Festplattenspeicher, einer Datenbank oder einem optischen oder magnetischen Speichermedium. Zudem kann der Datensatz die Materialeigenschaften der Herstellungsmaterialien 101 umfassen. Diese Materialeigenschaften können auch aus einer Datenbank abgerufen werden.

Der dreidimensionale Datensatz 103 der dentalen Restauration 100 wird beispielsweise auf Basis eines CAD-Modells mit einer STL-Schnittstelle erstellt. Die STL-Schnittstelle beschreibt die Oberfläche der dentalen Restauration 100 mithilfe von Dreiecksfacetten (engl. Tessellation = "Parkettierung"). Jede Dreiecksfacette 107 der Oberfläche wird durch die drei Eckpunkte und die zugehörige Flächennormale des Dreieckes charakterisiert.

Beim Bereitstellen des dreidimensionalen Datensatzes 103 kann die Größe der Dreiecksfacetten 107 verändert werden, um eine genauere Spannungsverteilung 113 zu erhalten. Beispielsweise wird in Bereichen, in denen hohe Spannungen zu erwarten sind, die Größe der Dreiecksfacetten 107 verringert.

Anschließend wird in Schritt S102 die räumliche Spannungsverteilung 113 innerhalb der dentalen Restauration 100 bei einer vorgegebenen Belastung 105 auf Basis des dreidimensionalen Datensatzes 103 berechnet.

Hierzu wird beispielsweise ein Computerprogramm durch einen Prozessor eines Computers durchgeführt, der auf den digitalen Speicher Zugriff hat, in dem der dreidimensionale Datensatz 103 und/oder weitere Programme zur Verarbeitung gespeichert sind. Das Computerprogramm umfasst Anweisungen oder Befehle, die den Computer veranlassen, die oben genannten Schritte auszuführen. Der Computer ist beispielsweise ein PersonalComputer, ein Tablet-PC oder eine Workstation. Das Verfahren kann jedoch auch von einem Computernetzwerk ausgeführt werden.

Unter Berücksichtigung der Form und der Materialverteilung der dentalen Restauration 100 kann dann die Spannungsverteilung 113 innerhalb der dentalen Restauration berechnet werden. Dabei ergeben sich an unterschiedlichen Orten der dentalen Restauration 100 im allgemeinen unterschiedliche Spannungen. Im Schritt S103 wird der dreidimensionale Datensatz 103 auf Basis der simulierten Spannungsverteilung 113 angepasst, so dass sich eine Spannungsverteilung 113 mit geringeren Maximalwerten ergibt. Hierbei kann die räumliche Form der dentalen Restauration 100 und/oder die Zusammensetzung und lokale Verteilung der Herstellungsmaterialien 101 verändert werden. Diese Schritte können iterativ so lange wiederholt werden, bis eine Spannung innerhalb der Spannungsverteilung 113 einen vorgegebenen Wert unterschreitet oder überschreitet. Beispielsweise wird die Form solange verringert, bis der vorgegebene Wert zum ersten Mal überschritten wird. Dann wird das iterative Wiederholen beendet und zu der Form einen Schritt davor zurückgegangen, bei der der Grenzwert nicht überschritten wurde.

Das Verfahren kann zudem Empfehlungen dafür geben, welche Herstellungsmaterialien sich für bestimmte dentale Restaurationen 100 besonders eignen.

Nach einem Beenden des Verfahrens kann der so gewonnene dreidimensionale Datensatz 103 an ein Herstellungsgerät 200 übergeben werden, das die dentale Restauration 100 dementsprechend mit einem geeigneten Herstellungsverfahren herstellt. Der Datensatz 103 stellt die Netzkoordinaten des dreidimensionalen Datenmodells der dentalen Restauration 100 für die Fertigung mittels subtraktiver oder additiver Fertigungsverfahren/3D-Druck oder Rapid-Prototyping-Anlagen bereit.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: dentale Restauration
- 101: Herstellungsmaterial
- 103: Datensatz
- 105: Belastung
- 107: Dreiecksfacette
- 109: Bereich
- 111: Seitenfläche
- 113: Spannungsverteilung
- 115: Kraftvektor
- 117: Okklusal-Fläche
- 119: Metallschiene
- 121: Temporäre dentale Restauration
- 123: Inzisalbereich
- 125: Dentinbereich

- 200: Herstellungsgerät

## Patentansprüche

1. Verfahren zum Aufbauen einer dentalen Restauration (100), mit den Schritten:
- Bereitstellen (S101) eines dreidimensionalen Datensatzes (103), der die räumliche Form der dentalen Restauration (100) und eine räumliche Verteilung zumindest eines Herstellungsmaterials (101) innerhalb der dentalen Restauration (100) angibt;
- Simulieren (S102) einer räumlichen Spannungsverteilung (113) innerhalb der dentalen Restauration (100) bei einer vorgegebenen Belastung (105) auf Basis des dreidimensionalen Datensatzes (103); und
- Verändern (S103) des dreidimensionalen Datensatzes (103) auf Basis der simulierten Spannungsverteilung (113).

2. Verfahren nach Anspruch 1, wobei die Oberfläche der dentalen Restauration (100) durch Dreiecksfacetten (107) abgebildet wird.

3. Verfahren nach Anspruch 2, wobei die Dreiecksfacetten (107) in einem Bereich (109) zwischen zwei Zähnen oder im Bereich einer Okklusal-Fläche (117) eine geringere Fläche als in einem anderen Bereich der dentalen Restauration (100) aufweisen.

4. Verfahren nach einem der vorangehenden Ansprüche, wobei die räumliche Form der dentalen Restauration (100) verändert wird.

5. Verfahren nach Anspruch 4, wobei ein lokaler Bereich der Form ausgedehnt wird, wenn eine Spannung innerhalb der Spannungsverteilung (113) des lokalen Bereiches oberhalb eines vorgegebenen Grenzwertes liegt und/oder ein lokaler Bereich der Form verringert wird, wenn eine Spannung innerhalb der Spannungsverteilung (113) des lokalen Bereiches unterhalb eines vorgegebenen Grenzwertes liegt.

6. Verfahren nach Anspruch 4 oder 5, wobei ein Verbindungsquerschnitt zwischen zwei Zähnen der dentalen Restauration (100) erhöht wird, wenn eine Spannung innerhalb der Spannungsverteilung (113) oberhalb eines vorgegebenen Grenzwertes liegt und/oder ein Verbindungsquerschnitt zwischen zwei Zähnen der dentalen Restauration (100) verringert wird, wenn eine Spannung innerhalb der Spannungsverteilung (113) unterhalb eines vorgegebenen Grenzwertes liegt.

7. Verfahren nach einem der vorangehenden Ansprüche, wobei das Herstellungsmaterial (101) in einem räumlichen Bereich ersetzt wird, wenn eine Spannung innerhalb der Spannungsverteilung (113)oberhalb oder unterhalb eines vorgegebenen Grenzwertes liegt.

8. Verfahren nach Anspruch 7, wobei einem ersten räumlichen Bereich der dentalen Restauration ein erstes Herstellungsmaterial (101) und einem zweiten räumlichen Bereich der dentalen Restauration ein zweites Herstellungsmaterial (101) zugeordnet wird.

9. Verfahren nach einem der vorangehenden Ansprüche, wobei die Spannungsverteilung (113) mit der veränderten Form und/oder dem veränderten Herstellungsmaterial (101) erneut simuliert wird.

10. Verfahren nach einem der vorangehenden Ansprüche, wobei die Verfahrensschritte iterativ wiederholt werden.

11. Verfahren nach Anspruch 10, wobei ein iteratives Wiederholen der Verfahrensschritte beendet wird, wenn eine Spannung innerhalb der Spannungsverteilung (113) einen vorgegebenen Wert unterschreitet oder überschreitet.

12. Verfahren nach einem der vorangehenden Ansprüche, wobei die dreidimensionale Datensatz (103) an ein Herstellungsgerät (200) übermittelt wird.

13. Verfahren nach einem der vorangehenden Ansprüche, wobei ein materialspezifischer Mindestwert bei der Herstellung der dentalen Restauration (100) unterschritten wird und/oder ein materialspezifischer Höchstwert bei der Herstellung der dentalen Restauration (100) überschritten wird.

14. Computerprogramm, umfassend Befehle, die bei der Ausführung des Computerprogramms durch einen Computer diesen veranlassen, das Verfahren nach einem der Ansprüche 1 bis 13 auszuführen.

15. Herstellungsgerät (200) mit einem Computerprogramm nach Anspruch 14.
